# EUROPÄISCHE PATENTSCHRIFT

(11) **EP 2 242 674 B1**
(45) Veröffentlichungstag und Bekanntmachung des Hinweises auf die Patenterteilung: **12.12.2012**
(21) Anmeldenummer: 09711855.8
(22) Anmeldetag: 17.02.2009
(51) Int. Cl.: G08G 1/16, B60T 8/1755, G01S 13/42, G05D 1/02, B60W 30/08, G01S 13/86, G01S 13/93, B60W 40/04, B60R 21/0134, B60K 31/00, B60W 30/10

(54) **VERFAHREN UND ASSISTENZSYSTEM ZUM ERFASSEN VON OBJEKTEN IM UMFELD EINES FAHRZEUGS**
METHOD AND ASSISTANCE SYSTEM FOR DETECTING OBJECTS IN THE SURROUNDING AREA OF A VEHICLE
PROCÉDÉ ET SYSTÈME D'ASSISTANCE POUR DÉTECTER DES OBJETS AU VOISINAGE D'UN VÉHICULE

(30) Priorität: 20.02.2008 DE 102008010144
(43) Veröffentlichungstag der Anmeldung: 27.10.2010
(73) Patentinhaber: Continental Teves AG & Co. OHG, 60488 Frankfurt (DE)
(72) Erfinder: STRAUSS, Matthias, 64319 Pfungstadt (DE); KOMAR, Matthias, 88239 Wangen (DE); SWOBODA, Adam, 64521 Gross-Gerau (DE); YIN, Xiuxun, 47249 Duisburg (DE)
(86) Internationale Anmeldenummer: PCT/EP2009/051832
(87) Internationale Veröffentlichungsnummer: WO 2009/103692

(56) Entgegenhaltungen:
- EP-A- 1 403 660
- EP-A- 1 818 231
- EP-A- 2 012 211
- WO-A-03/093914
- DE-A1-102004 057 296
- DE-A1-102005 039 167
- DE-A1-102007 007 540

## Beschreibung

### Technisches Gebiet

Die Erfindung bezieht sich auf die Erfassung von Objekten im Umfeld eines Fahrzeugs, insbesondere eines Kraftfahrzeugs. Insbesondere betrifft die Erfindung ein Verfahren zum Bestimmen von relevanten Objekten in einem sich auf einer Fahrbahn bewegenden Fahrzeug, bei dem in Abhängigkeit von einer Position eines relevanten Objekts eine Assistenzfunktion ausgeführt wird. Ferner betritt die Erfindung ein Fahrerassistenzsystem für ein sich auf einer Fahrbahn bewegendes Fahrzeug umfassend einen Kamerasensor zum Erfassen von Kamerabildern eines Umfelds des Fahrzeugs.

### Hintergrund der Erfindung

In modernen Kraftfahrzeugen sind oftmals Assistenzsysteme vorgesehen, die den Fahrer bei der Führung des Kraftfahrzeugs unterstützen. Verschiedene Systeme sehen dabei vor, dass Objekte, die in Bezug auf die vorgesehene Assistenzfunktion relevant sind, mittels eines Kamerasensors des Fahrzeugs erfasst werden. Die Kamerabilder werden dabei von Auswerteeinrichtungen analysiert, um die relevanten Objekte zu identifizieren und ihre relative Position in Bezug auf das Fahrzeug zu bestimmen. In Abhängigkeit von dem Abstand zwischen dem Fahrzeug und einem relevanten Objekt wird von den Assistenzfunktionen die Durchführung von vorgegebenen Maßnahmen gesteuert.

Eine derartige Funktion ist ein Spurhalteassistent, der den Fahrer des Fahrzeugs dabei unterstützt, das Fahrzeug in einer Fahrspur zu halten. Hierzu werden anhand der Kamerabilder Fahrbahnmarkierungen identifiziert, welche die Fahrspur des Fahrzeugs begrenzen. Wenn ermittelt wird, dass sich das Fahrzeug einer erfassten Fahrbahnmarkierung in einer vorgegebenen Weise nähert oder diese überfährt, werden geeignete Maßnahmen ausgeführt, um das Fahrzeug in die Mitte seiner Fahrspur zurückzuführen. Die Maßnahmen können eine Warnung des Fahrers umfassen, so dass dieser korrigierend in das Fahrverhalten des Fahrzeugs eingreifen kann. Gleichfalls kann die Ausführung automatischer Lenkbewegungen vorgesehen sein, um das Fahrzeug in die Mitte der Fahrspur zurückzuführen.

Darüber hinaus sind Assistenzsysteme bekannt, die drohende Kollisionen des Fahrzeugs mit einem Objekt im Umfeld des Fahrzeugs erkennen und im Bedarfsfall Maßnahmen zur Vermeidung der Kollision und/oder zur Verringerung von Kollisionsfolgen ausführen. Derartige Systeme erkennen Gefahrenobjekte, mit denen das Fahrzeug kollidieren könnte, oftmals anhand einer Auswertung von Bildern, die mittels einer Kamera des Fahrzeugs erfasst werden. Der Abstand zwischen dem Fahrzeug und diesen Objekten kann ebenfalls anhand der Kamerabilder ermittelt werden und wird herangezogen, um zu entscheiden, ob und in welchem Zeitpunkt Maßnahmen zur Kollisionsvermeidung bzw. Verringerung von Kollisionsfolgen eingeleitet werden. Derartige Maßnahmen können beispielsweise die automatische Ausführung von Fahrmanövern, wie Bremsmanöver oder Ausweichmanövern, umfassen. Um Folgen einer Kollision für die Fahrzeuginsassen zu verringern, können insbesondere passive Sicherheitsmittel, wie beispielsweise reversible Gurtstraffer, geeignet gesteuert werden.

Die Identifizierung von relevanten Objekten in Bilddaten, die mit einem Kamerasensor erfasst worden sind, basiert in der Regel auf der Erkennung von typischen Strukturmerkmalen, welche die Objekte innerhalb der Bilddaten aufweisen. Dabei kann es zu fehlerhaften Erkennungen von relevanten Objekten kommen, die zu einer Fehlauslösung der entsprechenden Assistenzfunktion führen können. So können beispielsweise Objekte am Fahrbahnrand innerhalb der Bilddaten ähnliche Strukturen aufweisen wie ein anderes Fahrzeug, mit dem das eigene Fahrzeug kollidieren könnte. Gleichfalls können anstelle von Fahrbahnmarkierungen weitere auf der Fahrbahn befindliche Objekte mit ähnlichen Eigenschaften fehlerhaft als Fahrspurmarkierungen erkannt werden, oder es werden Fährspurmarkietungen einer anderen Fahrspur erfasst.

Die EP-A-1 403 660 offenbart eine Umgebungsüberwachungsvorrichtung für Fahrzeuge, die eine Überwachungstechnik auf Basis von Bildinformationen und Radardaten einsetzt.

### Darstellung der Erfindung

Es ist eine Aufgabe der vorliegenden Erfindung, Fehlfunktionen einer Assistenzfunktion in einem Fahrzeug zu reduzieren, die darauf zurückzuführen sind, dass Objekte im Umfeld des Fahrzeugs anhand von Kamerabildern unzutreffend als relevanten Objekte identifiziert werden.

Die Aufgabe wird durch ein Verfahren mit den Merkmalen des Patentanspruchs 1 und durch ein Fahrerassistenzsystem mit den Merkmalen des Patentanspruchs 14 gelöst. Ausführungsformen des Verfahrens und des Fahrerassistenzsystems sind in den abhängigen Ansprüchen angegeben.

Gemäß einem ersten Aspekt der Erfindung wird ein Verfahren zum Bestimmen von relevanten Objekten In einem sich auf einer Fahrbahn bewegenden Fahrzeug vorgeschlagen, bei dem in Abhängigkeit von einer Position eines relevanten Objekts eine Assistenzfunktion ausgeführt wird und die relevanten Objekte anhand einer Bildauswertung von mittels eines Kamerasensors erfassten Bildem eines Umfeld des Fahrzeug bestimmt werden. Bei dem Verfahren ist vorgesehen, dass mittels eines Radarsensors Positionen von stehenden Objekten ermittelt werden, dass anhand der Positionen der stehenden Objekte ein Verlauf eines Fahrbahnrands ermittelt wird und dass die Bildauswertung in Abhängigkeit von dem ermittelten Fahrbahnrandverlauf vorgenommen wird.

Gemäß einem zweiten Aspekt der Erfindung wird ein Fahrerassistenzsystem für ein sich auf einer Fahrbahn bewegendes Fahrzeug vorgeschlagen. Das System umfasst einen Kamerasensor zum Erfassen von Karnerabildem eines Umfelds des Fahrzeugs, eine erste Auswerteeinheit, die dazu ausgestaltet ist, relevante Objekte anhand der Kamerabilder zu ermitteln, und eine mit der ersten Auswerteeinheit gekoppelte Assistenzeinrichtung, die dazu ausgestaltet ist, eine Assistenzfunktion in Abhängigkeit von einer Position eines relevanten Objekts auszuführen. Weiterhin ist ein Radarsensor zur Erfassung von Objekten im Umfeld des Fahrzeugs vorgesehen und eine mit dem Radarsensor gekoppelte zweite Auswerteeinheit, wobei die zweite Auswerteeinheit dazu ausgebildet ist, anhand von Positionen von mit dem Radarsensor erfassten stehenden Objekten einen Verlauf eines Fahrbahnrands zu ermitteln und wobei die Bildauswertung in der ersten Auswerteeinheit in Abhängigkeit von dem ermittelten Fahrbahnrandverlauf durchführbar ist.

Die Erfindung nutzt damit die Erkenntnis, dass relevante Objekte eine bestimmte Lage in Bezug auf den Rand der Fahrbahn einnehmen, auf der sich das Fahrzeug bewegt. Der Verlauf des Fahrbahnrands wird dabei anhand von stehenden Objekten ermittelt, die mithilfe eines Radarsensors erfasst werden. Hierbei handelt es sich vorzugsweise um Objekte, die am Fahrbahnrand angeordnet sind, wie etwa Leitplanken, Streckenbegrenzungspfosten oder am Fahrbahnrand angeordnete Wände oder Mauern. Aufgrund der Berücksichtigung des auf diese Weise ermittelten Fahrbahnrandverlaufs bei der Bildauswertung können fehlerhafte Erkennungen von Objekten, die für eine Assistenzfunktion relevant sind, vermieden bzw. reduziert werden.

In einer Ausgestaltung des Verfahrens und des Fahrassistenzsystems ist vorgesehen, dass eine erste Assistenzfunktion die Ausführung einer Sicherheitsmaßnahme umfasst, wobei die Sicherheitsmaßnahme ausgeführt wird, wenn ein relevantes Objekt erfasst worden ist, mit dem das Fahrzeug mit einer Wahrscheinlichkeit kollidieren könnte. Die Sicherheitsmaßnahme kann beispielsweise ausgewählt sein aus der Gruppe umfassend einen automatischen Bremsvorgang, insbesondere eine automatische Notbremsen, ein Ausweichmanöver, eine Fahrerwarnung und eine Vorkonditionierung des Fahrzeugs durch Steuerung von passiven Sicherheitsmitteln.

Eine verbundene Ausgestaltung des Verfahrens und des Fahrerassistenzsystems sieht vor, dass anhand der Bildauswertung ein Objekt nur dann als relevantes Objekt bestimmt wird, wenn es außerhalb eines Bereichs liegt, in dem sich der ermittelte Fahrbahnrand befindet. Hierdurch wird vermieden, dass dem Fahrbahnrand zugehörige Objekte fälschlich als relevante Objekte identifiziert werden, mit denen das Fahrzeug kollidieren könnte. Ferner kann die Bildauswertung beschleunigt werden, da der Bildbereich, in dem sich der ermittelte Fahrbahnrand befindet, nicht im Hinblick auf das Vorhandensein von relevanten Objekten analysiert zu werden braucht, wodurch die zu analysierenden Bildbereiche verkleinert werden. Insbesondere kann die Bildauswertung zur Ermittlung relevanter Objekte auf Bildbereiche beschränkt werden, die außerhalb eines Bereichs liegen, in dem sich der ermittelte Fahrbahnrand befindet.

Zusätzlich oder alternativ kann es vorgesehen sein, dass anhand der Bildauswertung ein Objekt nur dann als relevantes Objekt bestimmt wird, wenn es außerhalb eines Bereichs auf einer dem Fahrzeug abgewandten Seite des ermittelten Fahrbahnrands liegt, da in diesem Bereich jenseits des ermittelten Fahrbahnrands in der Regel keine relevanten Objekte zu erwarten sind. Dabei kann die Bildauswertung auch auf Bildbereiche beschränkt werden, die außerhalb des Bereichs auf der dem Fahrzeug abgewandten Seite des ermittelten Fahrbahnrands liegen.

Eine Weiterbildung des Verfahrens und des Fahrerassistenzsystems umfasst, dass ein mittels des Radarsensors erfasstes stehendes Objekt, dessen Abstand zu dem ermittelten Fahrbahnrand einen Wert überschreitet, als nicht zu dem Fahrbahnrand gehörig klassifiziert wird. Anhand dieser Klassifizierung kann eine Auswahl von stehenden Objekten erfolgen, die nicht dem Fahrbahnrand zuzuordnen sind und insoweit im Hinblick auf eine mögliche Kollision mit dem Fahrzeug relevant sein können.

Dementsprechend ist bei einer verbundenen Ausgestaltung des Verfahrens und des Fahrerassistenzsystems vorgesehen, dass ein Objekt, welches als nicht zu dem Fahrbahnrand gehörig klassifiziert worden ist, anhand der Bildauswertung als relevantes Objekt bestimmbar ist" falls sich das Objekt auf einer dem Fahrzeug zugewandten Seite des Fahrbahnrands befindet. Hierdurch könnten stehende relevante Objekte zuverlässig identifiziert werden.

Ferner zeichnet sich eine Ausführungsform des Verfahrens und des Fahrerassistenzsystems dadurch aus, dass bei der Ermittlung des Fahrbahnrandverlaufs Objekte nicht berücksichtigt werden, die als nicht zu dem Fahrbahnrand gehörig klassifiziert werden. Hierdurch wird die Genauigkeit des ermittelten Fahrbahnrandverlaufs erhöht.

Eine weitere Ausprägung des Verfahrens und des Fahrerassistenzsystems zeichnet sich dadurch aus, dass anhand der Kamerabilder eine Fahrspurmarkierung erfasst wird, und eine Spurhalteassistenzfunktion in Abhängigkeit von einer relativen Position des Fahrzeugs in Bezug auf die erfasste Fahrspurmarkierung und in Abhängigkeit von einem Vergleich zwischen dem Verlauf der Fahrspurmarkierung und dem ermittelten Fahrbahnrandverlauf eine Maßnahme ausführt. Die Maßnahme kann beispielsweise eine Fahrerwarnung und/oder einen korrigierenden Lenkeingriff umfassen. Sie wird vorzugsweise ausgeführt, wenn der Abstand zwischen dem Fahrzeug und der Fahrbahnmarkierung einen Schwellenwert unterschreitet.

Vorteilhaft werden Maßnahmen zur Rückführung des Fahrzeugs in seine Fahrspur bei dieser Ausgestaltung auch in Abhängigkeit von dem Vergleich zwischen dem Verlauf der Fahrspurmarkierung und dem ermittelten Fahrbahnrandverlauf ausgeführt. Hierdurch kann die anhand der Bilddaten erkannte Fahrbahnrandmarkierung durch den ermittelten Fahrbahnrandverlauf plausibilisiert werden, wodurch Fehleingriffe der Spurhalteassistenzfunktion vermieden bzw. reduziert werden können.

Eine verbundene Ausführungsform des Verfahrens und des Fahrerassistenzsystems ist dadurch gekennzeichnet, dass eine aufgrund der relativen Position des Fahrzeugs in Bezug auf die Fahrspurmarkierung vorgesehene Maßnahme unterdrückt wird, wenn der Verlauf der Fahrspurmarkierung und der ermittelte Fahrbahnrandverlauf in vorbestimmter Weise voneinander abweichen. Vorteilhaft wird bei dieser Ausführungsform davon ausgegangen, dass die Fahrspurmarkierung als fehlerhaft erkannt worden ist, wenn ihr Verlauf in vorbestimmter Weise von dem ermittelten Fahrbahnrandverlauf abweicht. Insbesondere kann dies der Fall sein, wenn zwischen der Fahrbahnmarkierung und dem Fahrbahnrand ein Winkel besteht, der einen vorgegebenen Schwellenwert überschreitet. Wenn die Fahrbahnmarkierung und der ermittelte Fahrbahnrand hingegen im Wesentlichen parallel zueinander verlaufen, dann besteht eine hohe Sicherheit, dass die Fahrbahnmarkierung korrekt identifiziert worden ist.

Eine Weiterbildung des Verfahrens und des Fahrerassistenzsystems beinhaltet, dass der Fahrbahnrandverlauf auf der Grundlage einer modellbasierten Beschreibung bestimmt wird, indem Parameter des Modells geschätzt werden. Vorzugsweise entspricht das Modell einer vorgegebenen Kurve, die an die ermittelten Positionen der mittels des Radarsensors erfassten Objekte angepasst wird.

In einer verbundenen Ausgestaltung des Verfahrens und des Fahrerassistenzsystems ist vorgesehen, dass die Parameter ausgewählt sind aus der Gruppe umfassend einen seitlichen Abstand des Fahrbahnrads zum Fahrzeugs, einen Winkel des Fahrzeugrands zur Fahrzeuglängsrichtung, eine Krümmung des Fahrbahnrands und eine Änderung der Krümmung des Fahrbahnrands. Anhand dieser Parameter ist eine besonders zuverlässige Charakterisierung des Fahrbahnrandverlaufs möglich.

Eine Weiterbildung des Verfahrens und des Fahrerassistenzsystems ist dadurch gekennzeichnet, dass das Modell einen geradlinigen Verlauf des Fahrbahnrands beschreibt und die Parameter einen seitlichen Abstand vom Fahrzeug und/oder einen Winkel des Fahrbahnrands zur Fahrzeuglängsrichtung umfasst. Ein derartiges Modell erlaubt in den meisten Situationen eine ausreichend zuverlässige Beschreibung des Fahrbahnrandverlaufs, wobei aufgrund der geringen Anzahl von Parametern des Modells eine schnelle bzw. weniger rechenintensive Schätzung des Fahrbahnrandverlaufs möglich ist. Ferner wird vermieden, dass ein relativer Versatz von mittels des Radarsensors erfassten Objekten zueinander, der auf Ungenauigkeiten bei der Erfassung bzw. der Filterung der Messdaten des Radarsensors oder aufgrund eines vergrößerten Abstands eines Objekts zum tatsächlichen Fahrbahnrand zurückzuführen ist, fälschlich als Fahrbahnkrümmung interpretiert wird.

Darüber hinaus beinhaltet eine Ausgestaltung des Verfahrens und des Fahrerassistenzsystems, dass der Kamerasensor einen ersten Erfassungsbereich und aufweist und dass der Radarsensor einen zweiten Erfassungsbereich aufweist, der zumindest teilweise mit dem ersten Erfassungsbereich überlappt. Die Erfassungsbereich sind vorzugsweise in Fahrzeuglängsrichtung vor dem Fahrzeug angeordnet, um Objekte erfassen zu können, denen sich das Fahrzeug bei Vorwärtsfahrt nähert.

Ferner zeichnet sich eine Ausführungsform des Verfahrens und des Fahrerassistenzsystem dadurch aus, dass der Radarsensor Bestandteil eines in dem Fahrzeug enthaltenen Systems zur adaptiven Geschwindigkeitsregelung ist. Derartige System werden üblicherweise auch als ACC-System bezeichnet (ACC: Adaptive Cruise Control). In dieser Ausführungsform verfügt das Fahrzeug bereits über einen Radarsensor, der vorteilhaft im Rahmen der Erfindung zu einem Mehrwert führt.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Kraftfahrzeug mit einem System zum Schätzen eines Fahrbahnrandverlaufs anhand von Objekten, die mit einem Radarsensor erfasst werden,
- Fig. 2: eine schematische Blockdarstellung von Komponenten eines Assistenzsystem des in Figur 1 gezeigten Kraftfahrzeugs,
- Fig. 3: eine schematische Darstellung einer Situation in der Objekte am Fahrbahnrand mittels des Radarsensors des Kraftfahrzeugs erfasst werden.

### Darstellung von Ausführungsbeispielen

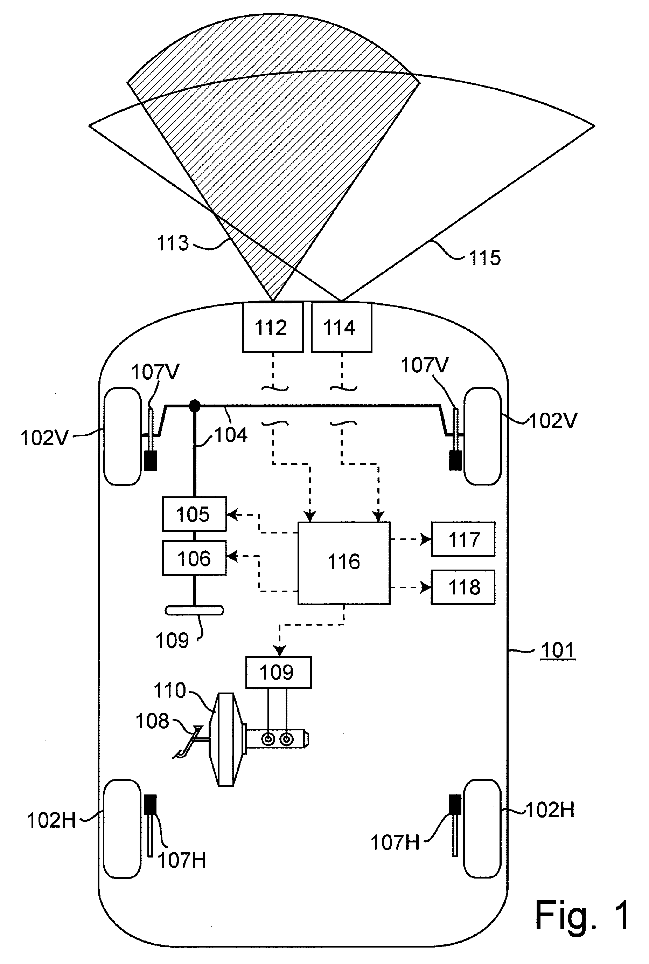

Figur 1 zeigt schematisch ein Kraftfahrzeug 101, dass in der beispielhaften Darstellung über zwei Vorderräder 102V und zwei Hinterräder 102H verfügt. Das Fahrzeug 101 wird durch einen in der Figur nicht dargestellten Antriebsmotor angetrieben, bei dem es sich beispielsweise um einen Verbrennungsmotor, einen Elektromotor oder einen Hybridmotor handeln kann. Der Antriebsmotor erzeugt ein Drehmoment, dass über einen in der Figur 1 ebenfalls nicht dargestellten Antriebsstrang an zwei oder vier Fahrzeugrädern 102V, 102H übertragen wird, um diese Räder 102V, 102H anzutreiben.

Die Vorderräder 102V des Fahrzeugs 101 sind lenkbar ausgeführt, und der Radeinschlagswinkel kann von dem Fahrer des Fahrzeugs 101 mittels einer Lenkhandhabe 103 eingestellt werden, die über einen Lenkstrang 104 mit den Vorderrädern 102V verbunden ist. Vorzugsweise handelt es sich bei der Lenkhandhabe 103 um ein Lenkrad. Optional ist in dem Lenkstrang 104 ein erster Lenkaktor 105 enthalten, der es ermöglicht, den Lenkstrang 104 mit einem Drehmoment zu beaufschlagen, das insbesondere auf die Lenkhandhabe 103 wirkt. Der Lenkaktor 105 kann beispielsweise als eine steuerbare Servolenkung ausgeführt sein und ermöglicht es, durch die Momentenbeaufschlagung der Lenkhandhabe 103 Lenkempfehlungen an den Fahrer des Fahrzeugs 101 zu vermitteln. Zusätzlich oder alternativ kann optional ein zweiter Lenkaktor 106 vorgesehen sein, mit dem der Radeinschlagswinkel der Vorderräder 102V gegenüber der Fahrervorgabe verändert werden kann. Mittels des Lenkaktors 106 können automatische Lenkbewegungen ausgeführt werden. In einer Ausgestaltung umfasst der Lenkaktor 106 ein beispielsweise als Planetengetriebe ausgestaltetes Überlagerungsgetriebe, mit dem der von dem Fahrer mittels der Lenkhandhabe 103 eingestellte Lenkwinkel mit einem weiteren Lenkwinkel überlagert werden kann. Der Radeinschlagswinkel der Vorderräder 102V ergibt sich dabei aus der Summe des von dem Fahrer eingestellten Lenkwinkels und des zusätzlichen Lenkwinkels.

Um das Fahrzeug 101 abzubremsen, ist eine Bremsanlage vorgesehen. Diese umfasst Radbremsen 107V, 107H die jeweils einem Rad 102V, 102H zugeordnet sind. Bei der Betätigung einer Radbremse 107V, 107H wird das zugehörige Rad 102V, 102H mit einem Bremsmoment beaufschlagt und dadurch abgebremst. Die Bremsanlage umfasst zudem eine Betätigungseinrichtung 108, die von dem Fahrer des Fahrzeugs 101 betätigt werden kann und vorzugsweise als ein Bremspedal ausgestaltet ist. Mit Hilfe der Betätigungseinrichtung 108 kann von dem Fahrer ein Bremsmoment in den Radbremsen 107V, 107H eingestellt werden, dessen Höhe sich aus dem Ausmaß der Betätigung ergibt. Darüber hinaus ist optional ein Bremsaktor 109 vorgesehen, mit dem die von den Radbremsen 107V, 107H, erzeugten Bremsmomente gegenüber der Fahrervorgabe verändert, insbesondere erhöht werden können. Dabei kann das Fahrzeug 101 mittels des Bremsaktors 109 automatisch abgebremst werden.

In der dargestellten Ausgestaltung handelt es sich um eine hydraulische Bremsanlage. Dabei ist die Betätigungseinrichtung 108 über einen Bremskraftverstärker 110 mit einem Hauptbremszylinder 111 verbunden. Über den Bremskraftverstärker 110 kann mittels der Betätigungseinrichtung 108 ein Vordruck in dem Hauptbremszylinder 111 aufgebaut werden, der über in der Figur 1 nicht dargestellte Druckleitungen zu den Radbremsen 107V, 107H übertragen werden kann. Aufgrund der Druckbeaufschlagung erzeugen die Radbremsen 107V, 107H jeweils ein Bremsmoment, mit dem das zugehörige Rad 102V, 102H abgebremst wird. Der Bremsaktor 109 ist in der dargestellten Ausgestaltung als eine Hydraulikeinheit ausgebildet, die zwischen den Hauptbremszylinder 111 und die Radbremsen 107V, 107H geschaltet ist. Die Hydraulikeinheit kann in einer dem Fachmann an sich bekannten Art ausgestaltet sein und einer Anordnung aus Ventilen sowie eine als Pumpe ausgestaltete Druckquelle umfassen, um einen Bremsdruck in den Radbremsen 107V, 107H aufzubauen und das Fahrzeug 101 abzubremsen.

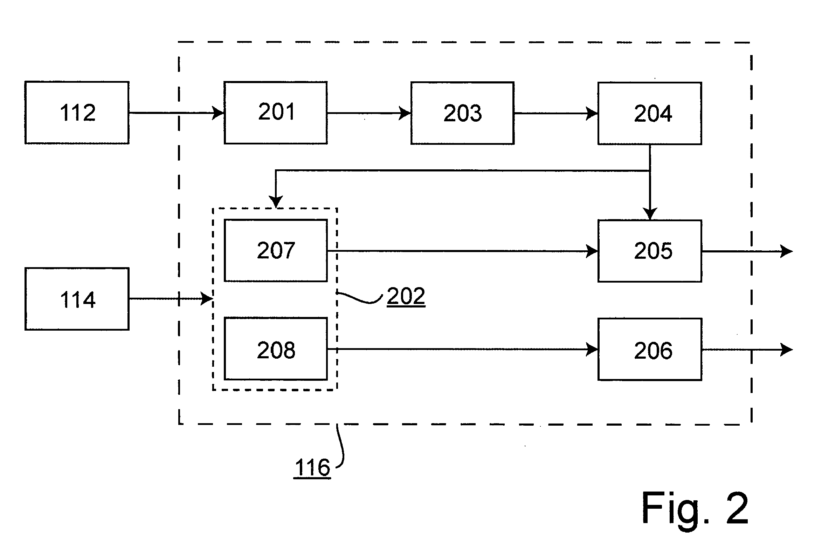

Das Fahrzeug 101 ist ferner mit einem Radarsensor 112 ausgerüstet, der im Bereich der Fahrzeugfront angeordnet ist und einen in Fahrzeuglängsrichtung nach vorne gerichteten Erfassungsbereich 113 aufweist. Der Erfassungsbereich 113 weist einen Öffnungswinkel auf, der so bemessen ist, dass auch im Nahbereich Objekte am Fahrbahnrand und vorzugsweise auch jenseits des Fahrbahnrandes mit dem Radarsensor 112 erfasst werden können. Beispielsweise liegt der Öffnungswinkel zwischen 45° und 70°. Der Radarsensor 112 umfasst einen Sender, mit dem Radarstrahlung in den Erfassungsbereich 113 ausgesendet wird. Von in dem Erfassungsbereich 113 befindlichen Objekten wird die Radarstrahlung teilweise zu dem Radarsensor 112 zurück reflektiert. Die reflektierte Strahlung wird mittels eines in dem Radarsensor 112 enthaltenen Empfängers erfasst und mit einer dem Radarsensor 112 zugeordneten, in der Figur 2 dargestellten Auswerteeinheit 201 ausgewertet. Dabei wird anhand des ermittelten Abstands zwischen dem Fahrzeug 101 und dem Objekt sowie anhand des Winkels, unter dem das Objekt erfasst worden ist, die relative Position des Objekts in Bezug auf das Fahrzeug 101 bestimmt. Bei ausgedehnten Objekten, wie beispielsweise Leitplanken oder Wänden, wird vorzugsweise auch ihre Breite bestimmt. Darüber hinaus wird unter Ausnutzung des Doppler-Effekts die relative Geschwindigkeit des Objekts in Bezug auf das Fahrzeug 101 ermittelt, aus der die absolute Geschwindigkeit des Objekts ermittelt werden kann. Die zuvor genannten Eigenschaften erfasster Objekte werden in einer Ausgestaltung weiteren Systemen des Fahrzeugs 101 in Form einer Objektliste bereitgestellt. Vorzugsweise enthält die Objektliste dabei lediglich Eigenschaften in Bezug auf Objekte, die eine vorgegebene Größe überschreiten und deren reflektierte Leistung einen Schwellenwert überschreitet. Insbesondere werden in einer Ausgestaltung nur Objekte in die Objektliste aufgenommen, die eine bestimmte Größe, Existenzwahrscheinlichkeit und Existenzdauer aufweisen. Zur Identifizierung der Objekte wird eine Gruppierung von erfassten Messpunkten vorgenommen. Die Erzeugung der Objektliste entspricht damit einer Vorfilterung der Messdaten des Radarsensors 112.

Der Radarsensor 112 kann Bestandteil eines in dem Fahrzeug 101 vorhandenen ACC-Systems sein, das in einer dem Fachmann bekannten Weise eine adaptive Abstands- und Geschwindigkeitsregelung durchführt. Der adaptive Abstands- und Geschwindigkeitsregler ist in diesem Fall eines der Fahrzeugsysteme, welche die Objektliste nutzen, die von der Auswerteeinheit 201 des Radarsensors 112 bereit gestellt wird.

Zusätzlich verfügt das Fahrzeug 101 über einen Kamerasensor 114. Dieser ist beispielsweise als eine Videokamera ausgeführt, mit der Bilder eines Kameraerfassungsbereichs 115 aufgenommen werden. Der Kameraerfassungsbereich 115 ist ebenfalls in Fahrzeuglängsrichtung vor dem Fahrzeug 101 angeordnet und überlappt den Erfassungsbereich 113 des Radarsensors 112 zumindest teilweise, so dass Objekte in dem Kameraerfassungsbereich 115 ebenfalls mittels des Radarsensors 112 erfasst werden können. Anstelle eines einzigen zentral angeordneten Kamerasensors 114 können auch mehrere Kamerasensoren vorgesehen sein, beispielsweise zwei seitlich an dem Fahrzeug 101 angeordneten Kamerasensoren.

Die Objektliste des Radarsensors 112 und die Bilder des gegebenenfalls vorhandenen Kamerasensors 114 werden einem Auswerte- und Steuersystem 116 übergeben. Diese umfasst neben der Auswerteeinrichtung 201 zur Auswertung der Radardaten auch eine Auswerteeinrichtung 202 zur Analyse der Kamerabilder. Ferner sind weitere Komponenten eines Fahrerassistenzsystems enthalten, die im Folgenden noch beschrieben werden und in der schematischen Blockdarstellung des Systems 116 in Figur 2 dargestellt sind. Diese umfassen insbesondere eine Schätzeinrichtung 204, in der ein geschätzter Fahrbahnrandverlauf ermittelt wird, eine Spurhalteassistenzeinrichtung 205, die durch Ansteuerung weiterer Komponenten des Fahrzeugs 101 Maßnahmen durchführt, um das Verlassen einer Fahrspur zu verhindern. Alternativ oder zusätzlich zu der Spurhalteassistenzeinrichtung 205 kann eine Kollisionsvermeidungseinrichtung 206 vorgesehen sein, die durch eine Ansteuerung von Komponenten des Fahrzeugs 101 Maßnahmen ausführt, um Kollisionen zwischen dem Fahrzeug 101 und Umfeldobjekten zu vermeiden und/oder Kollisionsfolgen zu reduzieren. Der Abstands- und Geschwindigkeitsregler eines gegebenenfalls vorhandenen ACC-Systems kann ebenfalls in das Auswerte- und Steuersystem 116 integriert werden. Die Komponenten des Auswerte- und Steuersystems 116 können als Softwaremodule realisiert sein, die mittels eines Mikroprozessors in einem elektronischen Steuergerät des Fahrzeugs 101 ausgeführt werden. Gleichfalls kann es vorgesehen sein, dass einzelne Komponente, insbesondere die Auswerteeinheiten 201, 202 jeweils ein Bestandteil des Radarsensors 112 und des Kamerasensors 114 sind. Die Schätzeinrichtung 204 kann gleichfalls in den Radarsensor 112 integriert werden. Die Spurhalteassistenzeinrichtung 205 und/oder die Kollisionsvermeidungseinrichtung 206 können in einem oder mehreren weiteren Steuergeräten bereitgestellt werden.

Die mittels des Kamerasensors 114 aufgenommenen Bilder werden der Auswerteeinrichtung 202 übergeben, welche die Bilddaten auswertet und Objekte beziehungsweise Strukturen innerhalb der Kamerabilder identifiziert und klassifiziert. In einer Ausgestaltung umfasst die Auswerteeinrichtung 202 insbesondere einen Block 207, in dem vorhandene Fahrbahnmarkierungen erkannt werden, welche die Fahrspuren der von dem Fahrzeug 101 benutzen Straße begrenzen. Die Erkennung kann in einer dem Fachmann grundsätzlich bekannten Weise vorgenommen werden. Für die identifizierten Fahrbahnmarkierungen wird zudem ihre relative Position in Bezug auf das Fahrzeug 101 bestimmt. Darüber hinaus können in einem Block 208 weitere Objekte vorgegebener Objektkategorien innerhalb der Kamerabilder identifiziert und ihre relative Position in Bezug auf das Fahrzeug 101 ermittelt werden. Hierbei kann es sich um Objekte handeln, die eine Gefahrquelle für das Fahrzeug 101 darstellen, insbesondere Objekte mit denen das Fahrzeug 101 kollidieren könnte. Beispielsweise können dabei weitere Fahrzeuge durch eine Objekterkennung innerhalb der Kamerabilder erkannt werden. Die Bildauswertung geschieht in einer dem Fachmann grundsätzlich bekannten Art und Weise anhand vorgegebener Bildmerkmale mittels eines oder mehrerer Klassifizierer. Beispiele geeigneter Klassifizierer sind Neuronale Netze oder Support Vector Machines. Ein Verfahren zur Erkennung von Objekten vorgegebener Kategorien, das in dem Block 208 der Auswerteeinrichtung 202 ausgeführt werden kann, ist beispielsweise in der DE 10 2007 050 568 A1 beschrieben. Anderen Verfahren sind jedoch gleichermaßen einsetzbar.

Die Objektliste des Radarsensors 112 wird in dem dargestellten Fahrerassistenzsystem dazu herangezogen, den Verlauf der Fahrspur des Fahrzeugs 101 anhand der Position von Objekten zu ermitteln, die mit dem Radarsensor 112 erfasst worden ist. Der anhand der Radardaten geschätzte Verlauf der Fahrspur kann herangezogen werden, um den mit dem Kamerasensor 114 ermittelten Fahrspurverlauf zu plausibilisieren. Ferner kann der Fahrspurverlauf bei der Bildauswertung in dem Block 208 der Auswerteeinrichtung 202 berücksichtigt werden, in dem Objekte innerhalb der Kamerabilder identifiziert werden, die eine mögliche Gefahrenquelle für das Fahrzeug 101 darstellen.

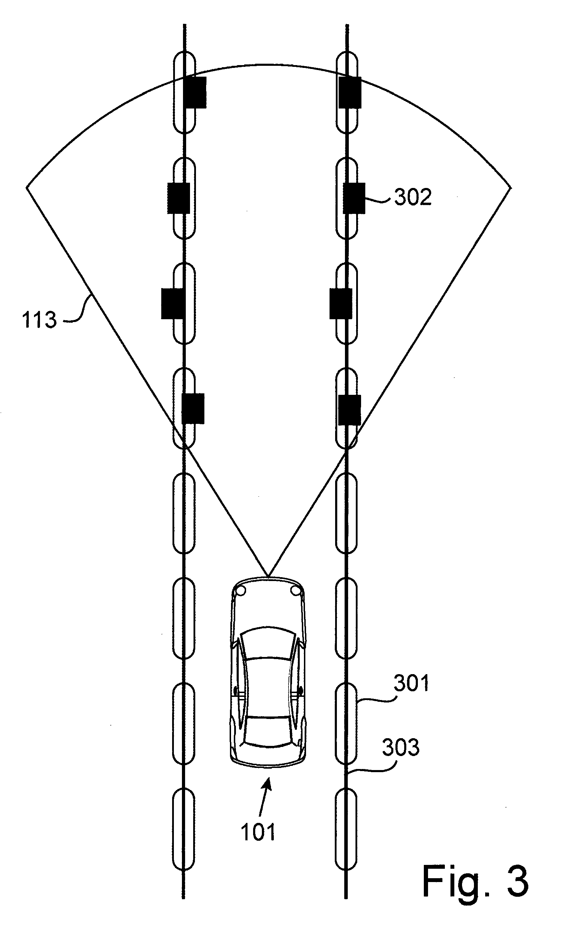

Wie in Figur 3 dargestellt, werden zur Bestimmung des Fahrspurverlaufs stehende Objekte 301 herangezogen, die am Rand der von dem Fahrzeug 101 befahrenen Fahrbahn angeordnet sind. Hierbei kann es sich beispielsweise um Leitplanken, Mauern, wie etwa Häuserwände, Streckenbegrenzungspfosten, wie sie insbesondere im Bereich von Baustellen eingesetzt werden, und dergleichen handeln. Derartige Objekte 301 sind oftmals in geringem Abstand von der Fahrbahn angeordnet und weisen eine gewisse Regelmäßigkeit auf, so dass sie zur Bestimmung des Fahrbahnrandverlaufs herangezogen werden können. In der beispielhaft in Figur 3 dargestellten Situation sind solche Objekte 301 auf beiden Seiten der Fahrbahn vorhanden, so dass der Verlauf des linken und rechten Fahrbahnrands geschätzt werden kann. Oftmals sind geeignete Objekte jedoch nur auf einer Fahrbahnseite vorhanden.

Um den Fahrbahnverlauf anhand von mittels des Radarsensors 112 erfassten Objekten 301 zu bestimmen, wird die Objektliste, die von der dem Radarsensor 112 zugeordneten Auswerteeinrichtung 201 erzeugt wird, zunächst einer Selektionseinrichtung 203 zugeführt. Diese wählt aus den in der Objektliste aufgeführten Objekten, die stehenden Objekte aus, d.h. die Objekte, deren Absolutgeschwindigkeit Null beträgt und deren Relativgeschwindigkeit in Bezug auf das Fahrzeug 101 der absoluten Geschwindigkeitskomponente des Fahrzeugs 101 entlang der Verbindungsrichtung zwischen dem Fahrzeug 101 und dem betreffenden Objekt entspricht. Sich bewegende Objekte, d.h. Objekte mit von Null verschiedener Absolutgeschwindigkeit, werden von der Selektionseinrichtung 203 verworfen.

Die in der Objektliste enthaltenen Objektdaten der stehenden Objekte werden von der Selektionseinrichtung 203 an eine Schätzeinrichtung 204 übergeben, die anhand der Positionen der stehenden Objekte 301 den Verlauf des Fahrbahnrands ermittelt. Zur Verdeutlichung des Vorgehens ist in der Figur 3 zusätzlich zu den Objekten 301 die jeweils von dem Radarsensor 112 gemeldete Position 302 der Objekte 301 dargestellt, die aufgrund von Messungenauigkeiten von der tatsächlichen Position der Objekte 301 abweichen kann. Darüber hinaus zeigt Figur 3 den mittels der Schätzeinrichtung 204 geschätzten Fahrbahnrandverlauf 303.

Die Bestimmung des Fahrbahnrandverlaufs in der Schätzeinrichtung 204 setzt ein, wenn sich eine vorgegebene Anzahl von gemeldeten Standobjekten 301 in einem Korridor mit einer vorgegebenen Form befindet. Um eine derartige Situation zu erkennen, wird die relative Position der Standobjekte 301 zueinander von der Schätzeinrichtung 204 überwacht. Vorzugsweise ist der Korridor gerade und hat eine vorgegebene Breite. In einer Ausgestaltung ist er zudem parallel zur Fahrzeuglängsachse ausgerichtet, um die Identifizierung von Objekten 301 am Fahrbahnrand zu erleichtern.

Wenn die Schätzeinrichtung 204 feststellt, dass die Eintrittsbedingung für das Schätzverfahren erfüllt ist, d.h., wenn die vorgegebenen Anzahl von Objekten innerhalb des vorgegebenen Korridors erkannt worden ist, dann wird anhand der mit dem Radarsensor 112 erfassten Standobjekte 301 der approximierte Fahrbahnrandverlauf 303 geschätzt. Dies geschieht unter Verwendung eines mathematischen Modells des Fahrbahnrands, das an die erfassten Positionen 302 der Objekte 301 angepasst wird. Das Vorgehen entspricht der Bestimmung einer Regressionskurve bezüglich der ermittelten Positionen 302 der Objekte 301.

In einer Ausgestaltung ist der approximierte Fahrbahnrand 303 eine Gerade. In einem ortsfesten Koordinatensystem, das in einem Messzeitpunkt derart initialisiert wird, dass der Ursprung innerhalb des Fahrzeugs 101 liegt, beispielsweise im Fahrzeugschwerpunkt, die x-Achse in Fahrzeuglängsrichtung nach vorne weist und die y-Achse rechtwinklig zur Fahrzeuglängsachse ausgerichtet ist und bezüglich der Fahrzeuglängsrichtung nach links weist, hat der Fahrbahnrand 303 damit die Form *y* = *d* + *a· x .* Hierbei bezeichnet d den seitlichen Abstand des Fahrbahnrands 303 zum Schwerpunkt des Fahrzeugs 101 in dem Messzeitpunkt, und für die Steigung a der Geraden gilt tan γ = a , wobei γ der Winkel zwischen dem Fahrbahnrand 303 und der Fahrzeuglängsachse ist. Alternativ kann als Modell des Fahrbahnrands 303 auch eine Kurve höherer Ordnung, beispielsweise eine Kurve zweiter oder dritter Ordnung gewählt werden. Eine derartige Kurve besitzt neben den Parametern der Geraden eine Krümmung und - im Fall der Kurve dritter Ordnung - eine Änderung der Krümmung. Bei Verwendung einer Geraden kann jedoch vermieden werden, dass ein relativer Versatz von mittels des Radarsensors 117 erfassten Objekten 301 zueinander, die insbesondere auf eine ungenaue, die Gruppierung von Messpunkten beinhaltenden Vorfilterung der Radarmessdaten zurückzuführen ist, fälschlich als Fahrbahnkrümmung interpretiert wird. Bei einer genaueren Vorfilterung können jedoch auch Kurven zweiter oder dritter Ordnung als Modell des Fahrbahnrands verwendet werden.

Die Anpassung des Modells an die ermittelten Positionen 302 der Standobjekte 301 erfolgt durch eine Anpassung der Modellparameter. Die Berechnung des approximierten Fahrbahnrands 303 wird solange vorgenommen, wie von dem Radarsensor 112 ausreichend viele Standobjekte 301 erfasst werden. Für aufeinanderfolgende Erfassungsschritte wird die Berechnung jeweils an veränderte Objektlisten angepasst. Insbesondere werden dabei hinzugekommene Objekte 301 mit in die Auswertung einbezogen, und es erfolgt eine Anpassung an die veränderte Position des Fahrzeugs 101 in Bezug auf die in vorangegangenen Schritten bereits erfassten Objekte anhand eines entsprechenden Trackings des Fahrbahnrands 303.

Darüber hinaus werden bei der Schätzung des Fahrbahnrandverlaufs Objekte 301 nicht berücksichtigt, deren Abstand von dem approximierten Fahrbahnrand 303 einen vorgegebenen Wert überschreitet. Diese Objekte werden nicht als dem Fahrbahnrand 303 zugehörig angesehen. Vor allem werden dabei hinzukommende Objekte nicht bei der Bestimmung des Fahrbahnrands 303 berücksichtigt, deren Abstand zu dem bereits berechneten Fahrbahnrand 303 einen vorgegebenen Schwellenwert überschreitet.

Der in der Schätzeinrichtung 204 ermittelte Verlauf des Fahrbahnrands 303 wird in einer Ausgestaltung an eine Spurhalteassistenzeinrichtung 205. Der Spurhalteassistenzeinrichtung 205 wird ebenfalls die relative Position des Fahrzeugs 101 in Bezug vorhandene Fahrspurmarkierungen übergeben, die in der zuvor beschriebenen Weise in dem Block 207 der Auswerteeinrichtung 202 bestimmt wird.

Die Spurhalteassistenzeinrichtung 205 wertet die Position des Fahrzeugs 101 relativ zu erkannten Fahrspurrändern aus, um eine drohendes Verlassen der Fahrspur festzustellen. Ein drohendes Verlassen der Fahrspur wird dabei erkannt, wenn der Abstand zwischen dem Fahrzeug 101 und einem erkannten Fahrspurrand einen Schwellenwert unterschreitet. Wenn die Spurhalteassistenzeinrichtung 205 ein drohendes Verlassen der Fahrspur feststelle, dann wird in einer Ausgestaltung gesteuert von der Spurhalteassistenzeinrichtung 205 eine Warnung ausgegeben. Dies geschieht mittels einer Warneinrichtung, die in Figur 1 schematisch mit der Bezugsziffer 117 versehen ist. Hierbei kann es sich um eine optische Warnung handeln, die dem Fahrer des Fahrzeugs 101 angezeigt wird, um eine akustische Warnung, die mittels eines im Innenraum des Fahrzeugs 101 angeordneten Lautsprechers ausgegeben wird, oder um eine haptische Warnung, die beispielsweise durch eine Vibration eines Fahrersitzes des Fahrzeugs 101 vermittelt wird. Gleichfalls kann eine haptische Warnung als durch eine mit dem Lenkator 105 erzeugte Vibration der Lenkhandhabe 103 vermittelt werden. Eine Kombination mehrer Warnungen kann ebenfalls vorgesehen sein. Aufgrund der ausgegebenen Warnungen kann der Fahrer korrigierend in das Fahrverhalten des Fahrzeugs 101 eingreifen und das Fahrzeug 101 so in seine Fahrspur zurückführen bzw. das Verlassen der Fahrspur vermeiden.

In einer weiteren Ausgestaltung steuert die Spurhalteassistenzeinrichtung 205 den Lenkaktor 105 im Bedarfsfall derart an, dass die Lenkhandhabe 103 mit einem Lenkmoment beaufschlagt wird, das eine Lenkbewegung bewirkt, die das Fahrzeug 101 in Richtung der Mitte seiner Fahrspur führt. Anhand dieses Lenkmoments wird der Fahrer des Fahrzeugs 101 zum einen darauf aufmerksam gemacht, dass das Fahrzeug 101 seine Fahrspur verlässt. Zum anderen wird der Fahrer anhand des Lenkmoments dazu angeleitet, eine korrigierende Lenkbewegung auszuführen, die das Fahrzeug 101 in seine Fahrspur bzw. in die Mitte seiner Fahrspur zurückführt. Die Beaufschlagung der Lenkhandhabe 103 mit einem korrigierenden Lenkmoment kann zusätzlich oder alternativ zur Warnung des Fahrers vorgenommen werden. Alternativ zu der Beaufschlagung der Lenkhandhabe 103 mit dem Lenkmoment kann es auch vorgesehen sein, dass die Spurhalteassistenzeinrichtung 205 mittels des Lenkaktors 106 automatische Lenkbewegungen ausführt, die das Fahrzeug 101 in seine Fahrspur zurückführen bzw. in der Mitte seiner Fahrspur halten.

Ferner kann mittels der Spurhalteassistenzeinrichtung 205 auch eine Spurfolgeregelung durchgeführt werden. Hierbei wird das Fahrzeug 101 mithilfe von Steuereingriffen, die von einem in der Spurhalteassistenzeinrichtung 205 enthaltenen Spurfolgeregler gesteuert werden, entlang seiner Fahrspur geführt, indem der Abstand zwischen dem Fahrzeug 101 und dem ermittelten Fahrbahnrand im Wesentlichen konstant gehalten wird. Bei den Steuereingriffen kann es sich um automatische Lenkbewegungen handeln, die mittels des Lenkaktors 106 ausgeführt werden. Alternativ kann der Lenkstrang 104 mit dem Lenkaktor 105 mit einem Lenkmoment beaufschlagt werden, welches zu Lenkbewegungen führt, die das Fahrzeug 101 in konstantem Abstand zu der erfassten Fahrspurmarkierung halten.

Von der Spurhalteassistenzeinrichtung 205 werden vorzugsweise die mittels des Kamerasensors 114 erfassten Fahrspurmarkierungen als Fahrbahnränder herangezogen, sofern sie vorhanden sind. Wenn ausschließlich derartige Fahrspurmarkierungen erfasst und eine Schätzung des Fahrbahnrandverlaufs anhand von Radarobjekten 301 nicht möglich ist, dann werden die Fahrspurmarkierungen von der Spurhalteassistenzeinrichtung 205 als Fahrbahnränder herangezogen. Wenn Fahrspurmarkierungen nicht vorhanden sind oder aus anderen Gründen nicht mit dem Kamerasensor 114 erfasst werden können, jedoch mittels der Schätzeinrichtung 204 der Fahrbahnrandverlauf 303 anhand von Radarobjekten 301 geschätzt werden kann, dann wird der geschätzte Fahrbahnrandverlauf 303 als Fahrbahnrand verwendet.

Wenn Fahrspurmarkierungen mit dem Kamerasensor 114 erkannt werden und zusätzlich ein Fahrbahnrand 303 mittels der Schätzeinrichtung 204 auf der Grundlage von Radardaten geschätzt werden kann, dann wird der in der Schätzeinrichtung 204 ermittelte Fahrbahnrand 204 in einer Ausgestaltung zur Plausibilisierung des Verlaufs der erkannten Fahrspurmarkierungen verwendet. Hierzu kann geprüft werden, ob die erkannten Fahrspurmarkierungen und der geschätzte Fahrbahnrand 303 in vorgegebenen Grenzen parallel zueinander verlaufen bzw. Abweichungen von der Parallelität vorgegebene Schwellenwerte nicht überschreiten. Eine Abweichung von der Parallelität der erkannten Fahrspurmarkierung und des geschätzten Fahrbahnrands 303 wird in einer Ausgestaltung festgestellt, wenn ein Winkel zwischen der Fahrspurmarkierung und dem geschätzten Fahrbahnrands einen vorgegebenen Schwellenwert überschreitet. Wird keine Abweichung von der erwarteten Parallelität ermittelt, dann wird als Fahrbahnrand die erkannte Fahrspurmarkierung herangezogen. Ansonsten wird die Spurhalteassistenzfunktion deaktiviert. Durch eine derartige Plausibilisierung der erkannten Fahrspurmarkierung kann insbesondere vermieden werden, dass der Spurhalteassistenzfunktion Fahrspurmarkierrungen zugrunde gelegt werden, deren Verlauf fehlerhaft bestimmt worden ist oder die einer anderen als der Fahrspur des Fahrzeugs 101 zugeordnet sind. Dabei kann die Plausibilisierung auch dann vorgenommen werden, wenn die Fahrspurmarkierungen auf einer Seite des Fahrzeugs 101 erfasst wird und der geschätzte Fahrbahnrandverlauf für die andere Fahrzeugseite 303 bestimmt wird.

In einer Ausgestaltung ist alternativ zu der Bereitstellung des geschätzten Fahrspurverlaufs 303 für die Spurhalteassistenzeinrichtung 205 oder zusätzlich hierzu eine Vernetzung der Schätzeinrichtung 204 und des Blocks 208 der Auswerteeinrichtung 202 vorgesehen, in dem anhand der mittels des Kamerasensors 114 erfassten Kamerabilder Gefahrenobjekte identifiziert werden, mit denen das Fahrzeug 101 kollidieren könnte.

Die Ergebnisse der in dem Block 208 vorgenommenen Auswertung werden in einer Kollisionsvermeidungseinrichtung 206 verwendet. Diese ist vorgesehen, um Maßnahmen zu steuern, die eine Kollision des Fahrzeugs 101 mit einem Objekt vermeiden oder Kollisionsfolgen vermindern. Die Maßnahmen werden von der Kollisionsvermeidungseinrichtung 206 vorzugsweise eingeleitet, wenn eine bestimmte Wahrscheinlichkeit für eine Kollision zwischen dem Fahrzeug 101 und einem erfassten Objekt besteht.

Zur Ermittlung dieser Wahrscheinlichkeit wird in einer Ausgestaltung eine Kollisionszeit berechnet, die der Zeitdauer bis zu einer Kollision mit dem Objekt entspricht. Diese wird aus der relativen Position des Objekts in Bezug auf das Fahrzeug 101 und der Relativgeschwindigkeit zwischen dem Fahrzeug 101 und dem betreffenden Objekt berechnet. Die relative Position des Objekts in Bezug auf das Fahrzeug 101 wird in einer Ausgestaltung auf der Grundlage einer mittels des Radarsensors 12 durchgeführten Abstandsmessung bestimmt. Wenn der Kamerasensor 114 eine Stereokamera umfasst, können die Stereobilder ebenfalls zur Abstandsermittlung herangezogen werden. Wenn die Kollisionszeit einen bestimmten Schwellenwert unterschreitet, wird von der Kollisionsvermeidungseinrichtung 206 eine Sicherheitsmaßnahme eingeleitet. Wenn abgestufte Sicherheitsmaßnahmen vorgesehen sind, dann können zur Auslösung von Maßnahmen unterschiedlicher Eskalationsstufen verschiedene Schwellenwerte vorgesehen sein.

Insbesondere kann vorgesehen sein, dass die Kollisionsvermeidungseinrichtung 206 zur Vermeidung einer Kollision ein automatisches Bremsmanöver steuert, d.h. als ein Notbremsassistent ausgestaltet ist. Das Bremsmanöver wird vorzugsweise mittels des Bremsaktors 109 ausgeführt wird. Weiterhin kann vorgesehen sein, dass die Kollisionsvermeidungseinrichtung 206 ein automatisches Ausweichmanöver einleitet, das mittels des Lenkaktors 106 ausgeführt wird. Zusätzlich oder alternativ können im Falle einer drohenden Kollision auch optische, akustische oder haptische Warnungen ausgegeben werden, die den Fahrer auf eine mögliche bzw. drohende Kollision hinweisen, so dass dieser geeignete Maßnahmen zur Kollisionsvermeindung durchführen kann. Ferner kann es vorgesehen sein, das Fahrzeug 101 bei einer drohenden Kollision mit einem Objekt durch die Ansteuerung entsprechender Sicherheitsmittel, wie beispielsweise rekursiver Gurtstraffer, auf die Kollision vorzubereiten, um Kollisionsfolgen für die Fahrzeuginsassen zu verringern. Derartige Sicherheitsmittel sind in Figur 1 schematisch anhand des Blocks 118 dargestellt.

Die zuvor genannten Maßnahmen können dabei gestuft ausgeführt werden, wobei in unterschiedlichen Eskalationsstufen verschiedene Eingriffe vorgesehen sind. Warnungen sind dabei beispielsweise einer geringeren bzw. schwächeren Stufe zugeordnet und Eingriffe in das Fahrverhalten des Fahrzeugs 101 einer höheren bzw. stärkeren Stufen. Ferner können die Maßnahmen einerseits in einer Notfallsituation ausgeführt werden. Andererseits könnten beispielsweise die Durchführung eines automatischen Bremsvorgangs und/oder die Ausgabe einer Warnung bzw. eines Hinweises auf ein in der Fahrspur befindliches stehendes Objekt auch im Rahmen einer Komfortfunktion vorgesehen werden, insbesondere im Rahmen eines so genannten Full-Speed-ACC-Systems, d.h. eines ACC-Systems, welches im gesamten Geschwindigkeitsbereich arbeitet und das Fahrzeug 101 gegebenenfalls bis in den Stand abbremst.

Die Erkennung und Identifizierung von relevanten Objekten in der Fahrspur des Fahrzeugs 101, mit denen das Fahrzeug 101 kollidieren könnte, erfolgt anhand der mittels des Kamerasensors 114 erfassten Bilder in dem Block 208 der Auswerteeinrichtung 202. Es ist jedoch vorgesehen, die zuvor beschriebene Klassifizierung stehender, mit dem Radarsensor 112 erfasster Objekte einzusetzen, um die Erkennung zu verbessern bzw. zu beschleunigen.

In einer Ausgestaltung übermittelt die Schätzeinrichtung 204 hierzu den geschätzten Fahrbahnrandverlauf an die Auswerteeinrichtung 202, insbesondere an den Block 208. Alternativ oder zusätzlich kann die Schätzeinrichtung 204 die Positionen 302 der einzelnen Objekte 301 melden, die dem geschätzten Fahrbahnrand 303 zugeordnet und zur Schätzung des Fahrbahnrandverlaufs herangezogen wurden.

In einer Ausgestaltung werden anhand des von der Schätzeinrichtung gemeldeten geschätzten Fahrbahnrandverlaufs 303 die Bereiche des Kamerabildes ermittelt, die dem geschätzten Fahrbahnrandverlauf 303 zuzuordnen sind. Hierbei kann eine vorgegebene Breite des Fahrbahnrands 303 herangezogen werden, um einen ausgedehnten Bildbereich zu ermitteln, in dem sich der geschätzte Fahrbahnrand 303 befindet. Damit lassen sich die Strukturen innerhalb des Kamerabildes identifizieren, die dem Fahrbahnrand zuzuordnen sind. Sofern die Positionen 301 der einzelnen dem Fahrbahnrand zugeordneten Objekte 301 von der Schätzeinrichtung 204 an die Auswerteeinheit 202 gemeldet wird können die Positionen der einzelnen Objekte 301 berücksichtigt werden, um zu dem Fahrbahnrand 303 gehörende Strukturen zu identifizieren.

Strukturen, die dem Fahrbahnrand 202 zugeordnet worden sind, werden in der Auswerteeinheit 202 nicht als relevante Objekte bestimmt, mit denen das Fahrzeug 101 kollidieren könnte. Wird anhand der Bildauswertung der Kamerabilder ein Objekt identifiziert, das von der Schätzeinrichtung 204 dem Fahrbahnrand 303 zugeordnet worden ist bzw. im Bereich des ermittelten Fahrbahnrands 303 angeordnet ist, wird dieses nicht als relevant im Hinblick auf eine Kollision bestimmt. In einer Ausgestaltung ist vorgesehen, dass das Kamerabild innerhalb der ermittelten, dem Fahrbahnrand zugeordneten Strukturen bzw. Bildbereiche nicht im Hinblick darauf ausgewertet wird, ob relevante Objekte enthalten sind, mit denen das Fahrzeug kollidieren könnte.

Da der Fahrer in der Regel dem Fahrbahnverlauf folgt, sind die dem Fahrbahnrand zugehörigen Objekte nicht relevant im Hinblick auf eine mögliche Kollision. Durch die Vernachlässigung der Fahrbahnrandbereiche bei der Bildauswertung in dem Block 208 der Auswerteeinrichtung 202 wird diese beschleunigt, da bestimmte Bilderbereiche nicht näher analysiert werden müssen. Ferner wird die fehlerhafte Erkennung von relevanten Objekten am Fahrbahnrand vermieden, so dass Fehlauslösungen der von der Kollisionsvermeidungseinrichtung 206 gesteuerten Sicherheitsmaßnahmen reduziert werden können.

Darüber hinaus kann es auch vorgesehen sein, dass in dem Block 208 der Auswerteeinrichtung 202 Bildbereich ermittelt werden, die sich auf eine dem

Fahrzeug 101 abgewandten Seite des Fahrbahnrands 303 beziehen, d.h., die Bereiche abbilden, die vom Fahrzeug 101 aus betrachtet jenseits des Fahrbahnrands 101 liegen. Diese Bildbereiche entsprechen den Bereichen jenseits der Fahrbahn auf der sich das Fahrzeug 101 bewegt. In der Regel sind in diesen Bereich ebenfalls keine Gefahrenobjekte enthalten, mit denen das Fahrzeug kollidieren könnte. Vielmehr ist davon auszugehen, dass Objekte aus diesem Bereich sich nicht ohne Weiteres auf die Fahrspur des Fahrzeugs 201 bewegen. Daher wird für die Bildbereiche, die einer dem Fahrzeug 101 abgewandten Seite des Fahrbahnrands zugeordnet werden, in einer Ausgestaltung ebenfalls keine Auswertung im Hinblick darauf vorgenommen, ob relevante Objekte enthalten sind, mit denen das Fahrzeug 101 kollidieren könnte.

In einer weiteren Ausführungsform ist vorgesehen, dass von der Schätzeinrichtung alternativ oder zusätzlich die Positionen von Objekten an den Block 208 gemeldet werden, die nicht dem geschätzten Fahrbahnrand 303 zugeordnet werden und sich auf derselben Seite des geschätzten Fahrbahnrands 303 befinden wie das Fahrzeug 101. Hierbei handelt es sich um stehende Objekte, die sich auf der Fahrbahn des Fahrzeugs 101 befinden. Anhand der Position dieser Objekte werden in dem Block 201 dann die Bereiche des Kamerabilds ermittelt, die den Positionen entsprechen. Bezüglich der betreffenden Objekte nimmt die Auswerteeinrichtung 202 einen Abgleich mit den Objekten vor, die anhand der Bildauswertung ermittelt worden sind. Wird ein Objekt sowohl anhand der Bildauswertung ermittelt als auch von der Schätzeinrichtung 204 gemeldet, dann wird das Objekt als relevant im Hinblick auf eine Kollision des Fahrzeugs 101 bestimmt. Zudem kann vorgesehen sein, dass ein Objekt, welches nicht sowohl anhand der Radardaten als auch anhand der Kamerabilder erkannt worden ist, verworfen wird.

Weiterhin kann vorgesehen sein, dass die betreffenden Bereiche bei der Bildanalyse priorisiert ausgewertet werden, um relevante stehende Objekte zu ermitteln, mit denen das Fahrzeug 101 kollidieren könnte. Durch eine derartige priorisierte Auswertung potenziell relevanter Bildbereiche kann die Erkennung relevanter Objekte, die von der Schätzeinrichtung 204 erkannt wurden, beschleunigt werden. Anhand der Bildanalyse kann dabei ermittelt werden, ob es sich tatsächlich um relevante Objekte handelt, mit denen das Fahrzeug kollidieren könnte.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Bestimmen von relevanten Objekten in einem sich auf einer Fahrbahn bewegenden Fahrzeug (101), wobei in Abhängigkeit von einer Position eines relevanten Objekts eine Assistenzfunktion ausgeführt wird und die relevanten Objekte anhand einer Bildauswertung von mittels Kamerasensors (114) erfassten Bildern eines Umfelds des Fahrzeugs (101) bestimmt werden, wobei
- mittels eines Radarsensors (112) Positionen (302) von stehenden Objekte (301) im Umfeld des Fahrzeugs (101) ermittelt werden,
- anhand der Positionen (302) der stehenden Objekte (301) ein Verlauf eines Fahrbahnrands (303) ermittelt wird, und
- die Bildauswertung in Abhängigkeit von dem ermittelten Fahrbahnrandverlauf (303) vorgenommen wird,
**dadurch gekennzeichnet, dass**
anhand der Kamerabilder eine Fahrspurmarkierung erfasst wird, und eine Spurhalteassistenzfunktion in Abhängigkeit von einer relativen Position des Fahrzeugs (101) in Bezug auf die erfasste Fahrspurmarkierung und in Abhängigkeit von einem Vergleich zwischen dem Verlauf der Fahrspurmarkierung und dem ermittelten Fahrbahnrandverlauf (303) eine Maßnahme ausführt.

2. Verfahren nach Anspruch 1 , bei dem eine erste Assistenzfunktion die Ausführung einer Sicherheitsmaßnahme umfasst, wobei die Sicherheitsmaßnahme ausgeführt wird, wenn ein relevantes Objekt erfasst worden ist, mit dem das Fahrzeug (101) mit einer Wahrscheinlichkeit kollidieren könnte.

3. Verfahren nach Anspruch 2, bei dem anhand der Bildauswertung ein Objekt nur dann als relevantes Objekt bestimmt wird, wenn es außerhalb eines Bereichs liegt, in dem sich der ermittelte Fahrbahnrand (303) befindet.

4. Verfahren nach Anspruch 2 oder 3, bei dem anhand der Bildauswertung ein Objekt nur dann als relevantes Objekt bestimmt wird, wenn es außerhalb eines Bereichs auf einer dem Fahrzeug (101) abgewandten Seite des ermittelten Fahrbahnrands (303) liegt.

5. Verfahren nach einem der vorangegangenen Ansprüche, bei dem ein mittels des Radarsensors (112) erfasstes stehendes Objekt, dessen Abstand zu dem ermittelten Fahrbahnrand (303) einen Wert überschreitet, als nicht zu dem Fahrbahnrand (303) gehörig klassifiziert wird.

6. Verfahren nach Anspruch 5, bei dem ein Objekt, welches als nicht zu dem Fahrbahnrand (303) gehörig klassifiziert worden ist, anhand der Bildauswertung als relevantes Objekt bestimmbar ist, falls sich das Objekt auf einer dem Fahrzeug (101) zugewandten Seite des Fahrbahnrands (303) befindet.

7. Verfahren nach Anspruch 5 oder 6, wobei bei der Ermittlung des Fahrbahnrandverlaufs (3039 Objekte nicht berücksichtigt werden, die als nicht zu dem Fahrbahnrand (303) gehörig klassifiziert werden.

8. Verfahren nach einem der vorangegangenen Ansprüche, bei dem eine aufgrund der relativen Position des Fahrzeugs (101 ) in Bezug auf die Fahrspurmarkierung vorgesehene Maßnahme unterdrückt wird, wenn der Verlauf der Fahrspurmarkierung und der ermittelte Fahrbahnrandverlauf (303) in vorbestimmter Weise voneinander abweichen.

9. Verfahren nach einem der vorangegangenen Ansprüche, bei dem der Fahrbahnrandverlauf (303) auf der Grundlage einer modellbasierten Beschreibung bestimmt wird, indem Parameter des Modells geschätzt werden.

10. Verfahren nach Anspruch 9, bei dem die Parameter ausgewählt sind aus der Gruppe umfassend: einen seitlichen Abstand des Fahrbahnrands (303) zum Fahrzeug (101 ), einen Winkel des Fahrbahnrands (303) zur Fahrzeuglängsrichtung, eine Krümmung des Fahrbahnrands (303) und eine Änderung der Krümmung des Fahrbahnrands (303).

11. Verfahren nach Anspruch 9 oder 10 , wobei das Modell einen geradlinigen Verlauf des Fahrbahnrands (303) beschreibt und die Parameter einen seitlichen Abstand vom Fahrzeug (101 ) und/oder einen Winkel des Fahrbahnrands (303) zur Fahrzeuglängsrichtung umfassen.

12. Verfahren nach einem der vorangegangenen Ansprüche, bei dem der Kamerasensor (114) einen ersten Erfassungsbereich (115) aufweist und der Radarsensor (112) einen zweiten Erfassungsbereich (113) aufweist, der zumindest teilweise mit dem ersten Erfassungsbereich überlappt.

13. Verfahren nach einem der vorangegangenen Ansprüche, bei dem der Radarsensor (112) Bestandteil eines in dem Fahrzeug (101 ) enthaltenen Systems zur adaptiven Geschwindigkeitsregelung ist.

14. Fahrerassistenzsystem für ein sich auf einer Fahrbahn bewegendes Fahrzeug (101 ) umfassend einen Kamerasensor (114) zum Erfassen von Kamerabildern eines Umfelds des Fahrzeugs (101 ), eine Auswerteeinheit (202), die dazu ausgestaltet ist, relevante Objekte anhand der Kamerabilder zu ermitteln, und eine mit der Auswerteeinheit (202) gekoppelte Assistenzeinrichtung (205; 206), die dazu ausgestaltet ist, eine Assistenzfunktion in Abhängigkeit von einer Position eines relevantes Objekts auszuführen, wobei ein Radarsensor (112) zur Erfassung von Objekten im Umfeld des Fahrzeugs (101 ) vorgesehen ist und eine Schätzeinrichtung (204), die dazu ausgebildet ist, anhand von mit dem Radarsensor (112) erfassten Positionen (302) von stehenden Objekten (301 ) einen Verlauf eines Fahrbahnrands (303) zu ermitteln und wobei die Bildauswertung in der Auswerteeinheit (202) in Abhängigkeit von dem ermittelten Fahrbahnrandverlauf (303) durchführbar ist,
**dadurch gekennzeichnet, dass**
anhand der Kamerabilder eine Fahrspurmarkierung erfasst wird, und eine Spurhalteassistenzfunktion in Abhängigkeit von einer relativen Position des Fahrzeugs (101 ) in Bezug auf die erfasste Fahrspurmarkierung und in Abhängigkeit von einem Vergleich zwischen dem Verlauf der Fahrspurmarkierung und dem ermittelten Fahrbahnrandverlauf (303) eine Maßnahme ausführt.

## Claims

1. A method for determining relevant objects in a vehicle (101) that is moving on a pavement, wherein an assistance function is performed depending on a position of a relevant object and the relevant objects are determined on the basis of an image analysis of images of the surroundings of the vehicle (101 ), said images being acquired by means of a camera sensor (114), wherein
- positions (302) of stationary objects (301) in the surroundings of the vehicle (101) are determined by means of a radar sensor (112),
- a course of a verge (303) is determined on the basis of the positions (302) of the stationary objects (301 ), and
- image analysis is performed depending on the determined course of the verge (303),
**characterized in that**
a traffic line is detected on the basis of the camera images and a lane keeping assistance function takes a measure depending on a relative position of the vehicle (101 ) with respect to the detected traffic line and depending on a comparison of the course of the traffic line with the determined course of the verge (303).

2. The method according to claim 1, in which a first assistance function comprises taking a safety measure, wherein the safety measure is taken if a relevant object has been detected with which the vehicle (101) might probably collide.

3. The method according to claim 2, in which an object is determined, on the basis of image analysis, as a relevant object only if said object is outside a region in which the determined verge (303) is located.

4. The method according to claim 2 or 3, in which an object is determined, on the basis of image analysis, as a relevant object only if said object is outside a region on a side of the determined verge (303) that faces away from the vehicle (101 ).

5. The method according to any one of the preceding claims, in which a stationary object detected by means of the radar sensor (112) is classified as an object that does not belong to the verge (303) if the distance between said stationary object and the determined verge (303) exceeds a particular value.

6. The method according to claim 5, in which an object that has been classified as an object that does not belong to the verge (303) can be determined as a relevant object on the basis of image analysis if said object is located on a side of the verge (303) that faces the vehicle (101).

7. The method according to claim 5 or 6, wherein objects that are classified as objects that do not belong to the verge (303) are not taken into consideration when determining the course of the verge (303).

8. The method according to any one of the preceding claims, in which a measure that is provided on account of the relative position of the vehicle (101) with respect to the traffic line is suppressed if the course of the traffic line and the determined course of the verge (303) deviate from each other in a predetermined manner.

9. The method according to any one of the preceding claims, in which the course of the verge (303) is determined on the basis of a model-based description by an estimation of parameters of the model.

10. The method according to claim 9, in which the parameters are selected from the group comprising: a lateral distance between the verge (303) and the vehicle (101), an angle between the verge (303) and the longitudinal direction of the vehicle, a curvature of the verge (303) and a change of the curvature of the verge (303).

11. The method according to claim 9 or 10, wherein the model describes a straight course of the verge (303) and the parameters comprise a lateral distance from the vehicle (101) and/or an angle between the verge (303) and the longitudinal direction of the vehicle.

12. The method according to any one of the preceding claims, in which the camera sensor (114) has a first coverage (115) and the radar sensor (112) has a second coverage (113) that at least partially overlaps the first coverage.

13. The method according to any one of the preceding claims, in which the radar sensor (112) is a part of a system for adaptive speed control included in the vehicle (101).

14. A driver assistance system for a vehicle (101) that is moving on a pavement, comprising a camera sensor (114) for the acquisition of camera images of the surroundings of the vehicle (101), an analyzing unit (202) designed to determine relevant objects on the basis of the camera images, and an assistance device (205; 206) coupled to the analyzing unit (202) and designed to perform an assistance function depending on a position of a relevant object, wherein a radar sensor (112) for the detection of objects in the surroundings of the vehicle (101) is provided and an estimating device (204) designed to determine a course of a verge (303) on the basis of positions (302) of stationary objects (301) is provided, which positions (302) are detected by means of the radar sensor (112), and wherein image analysis in the analyzing unit (202) can be performed depending on the determined course of the verge (303),
**characterized in that**
a traffic line is detected on the basis of the camera images and a lane keeping assistance function takes a measure depending on a relative position of the vehicle (101) with respect to the detected traffic line and depending on a comparison of the course of the traffic line with the determined course of the verge (303).

## Revendications

1. Procédé de détermination d'objets significatifs dans un véhicule (101) se déplaçant sur une chaussée, une fonction d'assistance étant réalisée en fonction d'une position d'un objet significatif, et les objets significatifs étant définis à l'aide d'une analyse d'image d'images d'un environnement du véhicule (101) détectées au moyen d'un capteur de caméra (114),
- des positions (302) d'objets (301) présents dans l'environnement du véhicule (101) étant déterminées au moyen d'un capteur de radar (112),
- une allure d'un bord de chaussée (303) étant déterminée à l'aide des positions (302) des objets (301) présents, et
- l'analyse d'image étant effectuée en fonction de l'allure d'un bord de chaussée (303) déterminée,
**caractérisé en ce que**,
à l'aide des images de caméra, un marquage des voies est détecté, et une fonction d'assistance de maintien dans la voie exécute une disposition en fonction d'une position relative du véhicule (101) par rapport au marquage des voies détecté et en fonction d'une comparaison entre l'allure du marquage des voies et l'allure d'un bord de chaussée (303) déterminée.

2. Procédé selon la revendication 1, dans lequel une première fonction d'assistance comprend l'exécution d'une disposition de sécurité, la disposition de sécurité étant exécutée quand un objet significatif a été détecté avec lequel il est probable que le véhicule (101) pourrait entrer en collision.

3. Procédé selon la revendication 2, dans lequel, à l'aide de l'analyse d'image, un objet n'est défini comme objet significatif que s'il est situé à l'extérieur d'une zone dans laquelle se trouve le bord de chaussée (303) déterminé.

4. Procédé selon la revendication 2 ou 3, dans lequel, à l'aide de l'analyse d'image, un objet n'est défini comme objet significatif que s'il est situé à l'extérieur d'une zone sur un côté du bord de chaussée (303) déterminé qui est opposé au véhicule (101).

5. Procédé selon une des revendications précédentes, dans lequel un objet présent qui est détecté au moyen du capteur de radar (112) et dont l'écart au bord de chaussée (303) déterminé dépasse une valeur, est classé comme n'appartenant pas au bord de chaussée (303).

6. Procédé selon la revendication 5, dans lequel un objet qui a été classé comme n'appartenant pas au bord de chaussée (303) peut être défini à l'aide de l'analyse d'image en tant qu'objet significatif si l'objet se trouve sur un côté du bord de chaussée (303) qui est tourné vers le véhicule (101).

7. Procédé selon la revendication 5 ou 6, dans lequel, lors de la détermination de l'allure d'un bord de chaussée (303), des objets qui sont classés comme n'appartenant pas au bord de chaussée (303) ne sont pas pris en considération.

8. Procédé selon une des revendications précédentes, dans lequel une disposition prévue sur la base de la position relative du véhicule (101) par rapport au marquage des voies est empêchée quand l'allure du marquage des voies et l'allure d'un bord de chaussée (303) déterminée divergent l'une de l'autre d'une façon prédéfinie.

9. Procédé selon une des revendications précédentes, dans lequel l'allure d'un bord de chaussée (303) est définie sur la base d'une description basée sur un modèle par le fait que des paramètres du modèle sont estimés.

10. Procédé selon la revendication 9, dans lequel les paramètres sont sélectionnés parmi le groupe comprenant : un écart latéral du bord de chaussée (303) au véhicule (101), un angle du bord de chaussée (303) par rapport à la direction longitudinale du véhicule, une courbure du bord de chaussée (303) et une variation de la courbure du bord de chaussée (303).

11. Procédé selon la revendication 9 ou 10, le modèle décrivant une allure rectiligne du bord de chaussée (303), et les paramètres comprenant un écart latéral du véhicule (101) et/ou un angle du bord de chaussée (303) par rapport à la direction longitudinale du véhicule.

12. Procédé selon une des revendications précédentes, dans lequel le capteur de caméra (114) présente une première zone de détection (115) et le capteur de radar (112) présente une deuxième zone de détection (113) qui se chevauche partiellement avec la première zone de détection.

13. Procédé selon une des revendications précédentes, dans lequel le capteur de radar (112) est un composant d'un système contenu dans le véhicule (101) pour le réglage adaptatif de la vitesse.

14. Système d'assistance à la conduite pour un véhicule (101) se déplaçant sur une chaussée, comprenant un capteur de caméra (114) pour la détection d'images de caméra d'un environnement du véhicule (101), une unité d'analyse (202) qui est constituée pour déterminer des objets significatifs à l'aide des images de caméra, et un équipement d'assistance (205 ; 206) qui est couplé à l'unité d'analyse (202) et qui est constitué pour exécuter une fonction d'assistance en fonction d'une position de l'objet significatif, un capteur de radar (112) étant prévu pour la détection d'objets dans l'environnement du véhicule (101), et un équipement d'estimation (204) qui est constitué pour, à l'aide de positions (302) d'objets (301) présents détectées avec le capteur de radar (112), déterminer une allure d'un bord de chaussée (303), et l'analyse d'image dans l'unité d'analyse (202) pouvant être exécutée en fonction du bord de chaussée (303) déterminé.
**caractérisé en ce que**,
à l'aide des images de caméra, un marquage des voies est détecté, et une fonction d'assistance de maintien dans la voie exécute une disposition en fonction d'une position relative du véhicule (101) par rapport au marquage des voies détecté et en fonction d'une comparaison entre l'allure du marquage des voies et l'allure d'un bord de chaussée (303) déterminée.
